# EUROPÄISCHE PATENTANMELDUNG

(11) **EP 1 992 259 A1**
(43) Veröffentlichungstag der Anmeldung: **19.11.2008**
(21) Anmeldenummer: 08002623.0
(22) Anmeldetag: 13.02.2008
(51) Int. Cl.: A47G 23/06, A47J 47/00

(54) **Arbeitsmittel für den Küchen- und Haushaltsbereich**

(30) Priorität: 15.05.2007 DE 202007006979 U
(71) Anmelder: Ihlow Stanz- und Kunststofftechnik GmbH, 31188 Holle (DE)
(72) Erfinder: Ihlow, Kerstin, 31188 Holle (DE); Peter, Jörg, 31188 Holle (DE)
(74) Vertreter: Sobisch, Peter

(57) **Zusammenfassung**

Ein solches Arbeitsmittel besteht aus einem plattenartigen, rechteckigen Funktionsteil (1) und einem an dessen eine Stirnseite angesetzten, ebenfalls plattenartigen, rechteckigen Griffteil (2), welche beide aus einem thermoplastischen Kunststoff bestehen. Das Funktionsteil (1) besteht aus einem rechteckigen Bodenabschnitt (3), an dessen Längsseiten (3',3") unter Zwischenanordnung von Filmscharnieren (6,7) rechteckige Seitenabschnitte (4,5) angeformt sind. An den Schmalseiten (3"',3"") des Bodenabschnitts (3) sind unter Zwischenanordnung von Filmscharnieren (10,11) weitere Seitenabschnitte (8,9) angeformt. Sämtliche Seitenabschnitte (4,5,8,9) weisen in Richtung senkrecht zu den jeweiligen Filmscharnieren (6,7,10,11) ein gleiches Breitenmaß auf. Die vier Eckenabschnitte (12) des Funktionsteils (1) sind jeweils durch zwei dreieckförmige, untereinander gleich beschaffene Faltabschnitte (13,14) gekennzeichnet, deren jeweils erste Seiten über ein Filmscharnier (15) mit einem Seitenabschnitt (8,9) und deren jeweils zweite Seiten über ein Filmscharnier (16) untereinander in Verbindung stehen. Das Griffteil (2) weist einen vergleichbaren Aufbau auf.

## Beschreibung

Die Erfindung bezieht sich auf ein Arbeitsmittel entsprechend dem Oberbegriff des Anspruchs 1.

Arbeitsmittel in der Form beispielsweise von Abstellflächen oder Unterlagen sind für den Haushalts- und Küchenbereich in unterschiedlicher Form und zu unterschiedlichen Zwecken bekannt. Diese können in der Darstellung einer Arbeitsfläche sowie einer Schutzfunktion für Tische und Möbelteile, in einer Wärmeisolierfunktion oder in der Funktion eines Ordnungs- oder Organisationshilfsmittels bestehen.

Entsprechend der jeweiligen Zweckbestimmung unterscheiden sich derartige Arbeitsmittel häufig in ihrer Gestaltung sowie ihrer stofflichen Zusammensetzung, ein Umstand, der zu einer Vielfalt an Einzelprodukten führt, deren Lagerung im Haushaltsbereich mit Hinblick auf eine rasche jederzeitige Verfügbarkeit organisatorische Vorkehrungen erforderlich macht.

Es ist die Aufgabe der Erfindung, ein Arbeitsmittel der eingangs bezeichneten Art unter Vermeidung der dem Stand der Technik anhaftenden Nachteile mit Hinblick auf eine Erweiterung der Verwendungsmöglichkeiten zu verbessern und den mit dessen Verwendung im Haushalt verbundenen organisatorischen Aufwand zu vermindern. Gelöst ist diese Aufgabe bei einem solchen Arbeitsmittel durch die Merkmale des Anspruchs 1.

Erfindungswesentlich ist hiernach in der allgemeinsten Form ein in einen Bodenabschnitt und Seitenabschnitte unterteilter plattenförmiger Grundkörper, wobei die Seitenabschnitte über Gelenke mit dem Bodenabschnitt in Verbindung stehen und in wenigstens einer aus dessen Ebene ausgeschenkten Position feststellbar sind. Der Grundkörper in der Ausgangsposition, in der die Seitenabschnitte nicht ausgeschwenkt sind, kann eine Arbeitsunterlage bilden. In der ausgeschwenkten Position der Seitenabschnitte kann sich auf einer Seite eine offene, schalenartige, zur Aufnahme von Gegenständen bestimmte Struktur ergeben. Diese kann umgekehrt, dass heißt auf der Gesamtheit der Berandungen ihrer Seitenabschnitte aufstehend eine Abstellplatte darstellen, die gegenüber einer Aufstellfläche aufgrund des sich unterseitigen Hohlraumes wärmeisoliert ist und geeignet ist, Beschädigungen infolge von örtlicher Wärmeeinwirkung zu vermeiden. Indem ein Seitenabschnitt in der Ebene des Bodenabschnitts verbleibt, in dieser Position fixiert ist, wohingegen alle übrigen Seitenabschnitte verschwenkt sind, kann eine schaufelartige Struktur dargestellt werden. Es handelt sich somit um ein einteiliges, durch wenige Handgriffe änderbares Arbeitsmittel, das für unterschiedliche Zwecke einsetzbar ist.

Das Arbeitsmittel ist entsprechend den Merkmalen des Anspruchs 2 in ein Funktionsteil, welches u. a. den Bodenabschnitt umfasst und ein Griffteil unterteilbar, welches an einen Seitenabschnitt des Bodenteils gelenkig angesetzt ist. Das Griffteil ist zur Darstellung eines Handgriffes angelegt und bemessen. Es kann zu diesem Zweck beispielsweise eine dementsprechende Oberflächenprofilierung aufweisen.

Die Merkmale der Ansprüche 3 und 4 sind auf die weitere Ausgestaltung des Griffteils gerichtet. Dieses ist ähnlich dem Funktionsteil ausgebildet und besteht global aus einem zentralen plattenförmigen Verbindungsabschnitt und an diesem unter Zwischenanordnung von Gelenken angesetzten Seitenabschnitten, die in gleicher Weise wie die Seitenabschnitte des Bodenabschnitts in einer ausgeschwenkten Position feststellbar sind. Feststellbar in diesem Sinne ist das Griffteil auch gegenüber dem Funktionsteil, so dass eine Handhabung des Arbeitsmittels insgesamt mittels des auf diese Weise dargestellten Handgriffs möglich ist.

Die Merkmale der Ansprüche 5 bis 8 sind auf die grundsätzlich rechteckige Ausbildung des Bodenabschnitts, des Verbindungsabschnitts sowie der an diese gelenkig angesetzten Seitenabschnitte gerichtet. Zur gestaltlichen Stabilisierung der verschwenkten Position der Seitenabschnitte, wobei von einem Schwenkwinkel von etwa 90° ausgegangen wird, sind in den Eckenabschnitten des Griffteils und gleichermaßen des Funktionsteils jeweils zwei dreieckförmige, untereinander gleich beschaffene und im verschwenkten Zustand der Seitenabschnitte aufeinander faltbare Faltabschnitte vorgesehen. Diese stabilisieren die verschwenkten Positionen der Seitenabschnitte, so dass das Arbeitsmittel in diesen Positionen eine dem Anwendungszweck angepasste Festigkeit bzw. Steifigkeit aufweist.

Zwar wird eine rechteckförmige Gestalt des Bodenabschnitts sowie des Verbindungsabschnitts bevorzugt - eine quadratische Ausführungsform kommt jedoch grundsätzlich ebenfalls in Betracht.

Das erfindungsgemäße Arbeitsmittel kann entsprechend den Merkmalen des Anspruchs 9 aus Kunststoff bestehen, vorzugsweise einem thermoplastischen Kunststoff, wobei die erwähnten Gelenke gänzlich durch Filmscharniere darstellbar sind. Dies eröffnet äußerst rationelle Fertigungsmöglichkeiten.

Die Merkmale des Anspruchs 10 sind auf mögliche konstruktive Ausbildungsformen der Festlegungsmechanismen gerichtet, mittels welcher die Seitenabschnitte des Bodenabschnitts sowie des Verbindungsabschnitts in der verschwenkten Position fixierbar sind. In Betracht kommen z. B. Druckknöpfe, Klettverschlüsse, sonstige Verrastungsmechanismen oder auch formschlüssig wirksamen Mittel wie z. B. einhängbare Laschen. Vorzugsweise sollte es sich um mit dem Funktionsteil sowie dem Griffteil unverlierbar in Verbindung stehende Mittel handeln.

Vergleichbare Mittel sind entsprechend den Merkmalen der Ansprüche 11 und 12 zur Festlegung der Faltabschnitte des Funktionsteiles und des Griffteiles aneinander sowie gegebenenfalls an benachbarten Seitenabschnitten des Bodenabschnittes bzw. des Verbindungsabschnitts vorgesehen.

Die Erfindung wird im Folgenden unter Bezugnahme auf das in den Zeichnungen dargestellte Ausführungsbeispiel näher erläutert werden. Es zeigen:
Fig. 1 eine Draufsicht auf das sich in einer ebenen Konfiguration befindliche Arbeitsmittel;
Fig. 2 eine modifizierte Seitenansicht des Arbeitsmittels gemäß Fig. 1 in einer aufgeklappten Konfiguration.

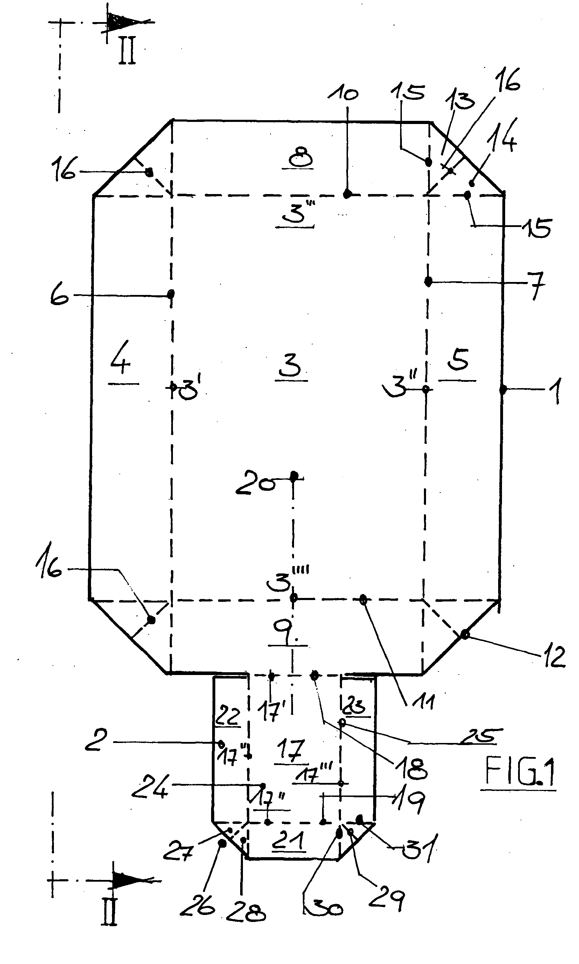

Das in Fig. 1 gezeigte Arbeitsmittel besteht aus einem plattenartigen, abgeschrägte Eckenbereiche aufweisenden, global rechteckförmigen Funktionsteil 1 und einem, an dessen eine Schmalseite angesetzten, ebenfalls plattenförmigen, global rechteckigen Griffteil 2.

Sowohl das Funktionsteil 1 als auch das Griffteil 2 können beispielsweise aus thermoplastischen Kunststoff bestehen.

Das Funktionsteil 1 ist durch einen zentral angeordneten rechteckigen Bodenabschnitt 3 gekennzeichnet, an dessen Längsseiten 3', 3" untereinander gleich beschaffene rechteckige Seitenanschnitte 4, 5 unter jeweiliger Zwischenanordnung von Filmscharnieren 6, 7 angeformt sind. An den Schmalseiten 3"', 3"" des Bodenabschnitts 3 sind untereinander gleich beschaffene rechteckige Seitenabschnitte 8, 9 unter jeweiliger Zwischenanordnung von Filmscharnieren 10, 11 angeformt. Wesentlich ist, dass alle Seitenabschnitte 4, 5, 8, 9 andererseits ein gleiches Breitenmaß, senkrecht zu den Filmscharnieren 6, 7 sowie 10, 11 gesehen, aufweisen.

Ein jeder der vier Eckenabschnitte 12 des Funktionsteils 1 ist durch zwei dreieckförmige, untereinander gleich beschaffene, Faltabschnitte 13, 14 gekennzeichnet, von denen jeweils eine erste Seite über ein Filmscharnier 15 mit einem Stirnabschnitt 8, 9 und die jeweils über eine zweite Seite über ein Filmscharnier 16 untereinander in Verbindung stehen, wohingegen eine jeweilige dritte Seite eine freie Berandung des Funktionsteils 1 bildet.

Das Griffteil 2 besteht aus einem zentralen, rechteckförmigen Verbindungsabschnitt 17, welches an seiner einen Schmalseite 17' über ein Filmscharnier 18 an einen mittigen Bereich des Seitenabschnitts 9, vorzugsweise symmetrisch bezüglich einer Längssymmetrieachse 20 angeformt ist. An der gegenüberliegenden Schmalseite 17" des Verbindungsabschnitts 17 ist unter Zwischenanordnung eines Filmscharniers 19 ein Seitenabschnitt 21 angeformt. Mit 22, 23 sind untereinander gleich beschaffene, rechteckige Seitenabschnitte bezeichnet, die jeweils über Filmscharniere 24, 25 an den Längsseiten 17''', 17"" des Verbindungsteils 17 angeformt sind.

Wesentlich ist, dass die Seitenabschnitte 21, 22, 23 jeweils gleiche Breiten senkrecht zu den Filmscharnieren 18, 24, 25 gesehen aufweisen.

Wesentlich ist ferner, dass keine Verbindung zwischen den, dem Seitenabschnitt 9 zugekehrten Schmalseiten der Seitenabschnitte 22, 23 besteht.

Die beiden Eckenabschnitte 26 des Griffteils 2 sind ähnlich den Eckenbereichen 12 des Funktionsteils ausgebildet und bestehen jeweils aus zwei, untereinander gleich beschaffenen dreieckigen Faltabschnitten 27, 28, die untereinander über ein Filmscharnier 29 und mit den angrenzenden Schmalseiten des Seitenabschnitts 21 über ein Filmscharnier 30 sowie den angrenzenden Schmalseiten der Seitenabschnitte 22, 23 über ein Filmscharnier 31 in Verbindung stehen.

Das Griffteil 2 ist vorzugsweise werkstoffgleich mit dem Funktionsteil 1 ausgebildet und es können beide Teile beispielsweise in einem einheitlichen Spritzformverfahren hergestellt werden.

In der in Fig. 1 dargestellten Konfiguration sind alle Abschnitte sowohl des Griffteiles 2 als auch des Funktionsteiles 1 in eine gemeinsame Ebene geschwenkt und es kann das Arbeitsmittel in dieser Form als eine Unterlage benutzt werden, zum Beispiel für Tätigkeiten, bei denen ein Schutz eines Tisches oder dergleichen vor Beschädigungen erforderlich ist.

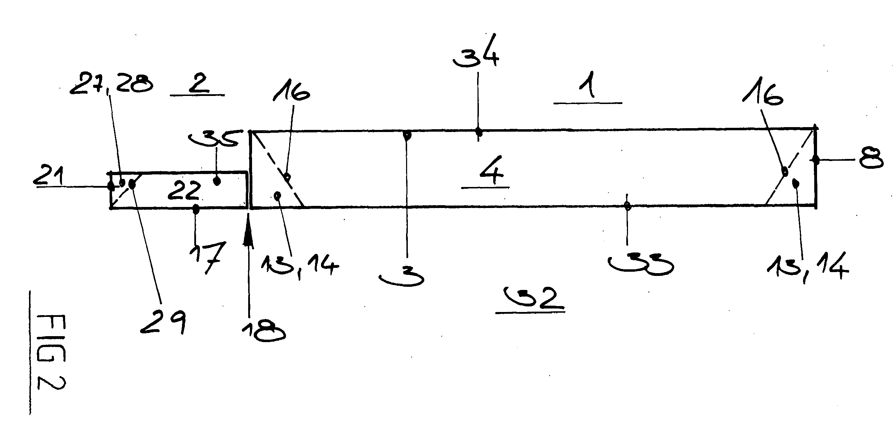

Fig. 2 zeigt eine solche Konfiguration des Arbeitsmittels, bei welcher die Seitenabschnitte 4, 5, 8, 9 relativ zu dem Bodenabschnitt 3 gleichermaßen um einen Winkel von 90° geschwenkt worden sind. Dieser Schwenkvorgang geht einher mit einem einwärts gerichteten Schwenken der Faltabschnitte 13, 14 zum einen um die Filmscharniere 15 gegenüber den angrenzenden Seitenabschnitten 4, 5, 8, 9sowie gleichzeitig relativ zueinander um die jeweiligen Filmscharniere 16.

Zur Stabilisierung dieser Konfiguration sind die somit aufeinander gefalteten und aneinanderliegenden Faltabschnitte 13, 14 sämtlicher Eckenabschnitte 12 aneinander und innenseitig an einem Seitenabschnitt 4, 5 fixiert, z, B. mittels zeichnerisch nicht dargestellter Druckköpfe, Kreppverschlüsse oder sonstiger vergleichbarer Mechanismen.

In jedem Fall bildet das Funktionsteil 1 in Fig. 2 eine zu einer Unterseite 32 hin offene Struktur, welche unter Benutzung der in Umfangsrichtung in einer gemeinsamen Ebene verlaufenden Berandungen 33 der Seitenabschnitte 4, 5, 8, 9 auf einer Unterlage, z. B. einem Tisch aufgestellt werden kann. Die Oberseite 34 kann in diesem Fall zum Abstellen von Gegenständen benutzt werden.

In vergleichbarer Weise sind an dem Griffteil 2 dessen Seitenabschnitt 21 sowie die beiden Seitenabschnitte 22, 23 um 90° verschwenkt, jedoch mit der Maßgabe, dass deren freie Berandungen 35 der Unterseite 32 abgekehrt sind und eine oberseitig offene Struktur bilden. Auch diese Schwenkvorgänge gehen einher mit einem einwärts gerichteten Schwenken der Faltabschnitte 27, 28 einerseits um die Filmscharniere 30, 31 relativ zu dem Stirnabschnitt 21 und relativ zueinander um die Filmscharniere 29.

Gegenüber der Darstellung gemäß Fig. 1 um 90° um das Filmscharnier 18 verschwenkt ist auch das Verbindungsteil 17, welches sich nunmehr in einer gemeinsamen Ebene mit den Berandungen 33 befindet.

Zur Stabilisierung des aufgefalteten Griffteils 2 sind die somit aufeinander gefalteten und aneinanderliegenden Faltabschnitte 27, 28 der beiden Eckenabschnitte 26 aneinander und innenseitig an einem Seitenabschnitt 22, 23 fixiert, z, B. mittels zeichnerisch nicht dargestellter Druckköpfe, Kreppverschlüsse oder sonstiger vergleichbarer Mechanismen.

Zur weiteren Stabilisierung der dargestellten Lage des aufgefalteten Griffteils 2 gegenüber dem aufgefalteten Funktionsteil 1 befinden sich zeichnerisch nicht dargestellte Laschen oder vergleichbare Mittel zwischen den Seitenabschnitten 22, 23, die dazu bestimmt sind, eine relative Schwenkbewegung des Griffteils 2 gegenüber dem Funktionsteil 1 zu verhindern.

Die Abmessungen des Griffteils 2 sind mit der Maßgabe angelegt, dass dieses in dem in Fig. 2 gezeigten aufgefalteten Zustand einen Hanggriff bildet, mittels welchem das gezeigte Arbeitsmittel als Einheit handhabbar ist, und zwar gegebenenfalls einschließlich der auf die4sem abgestellten Gegenstände.

Eine Benutzung des Arbeitsmittels in der in Fig. 2 gezeigten Konfiguration, bei der sich der Bodenabschnitt 3, dessen oberseitige freie Oberfläche eine Abstellfläche bildet, die mit Abstand gegenüber einer, durch die Berandung 33 gebildeten Aufstandfläche gehalten ist, kommt z. B. dann in Betracht, wenn die Darstellung einer Wärmeisolation zwischen der genannten Aufstandfläche und den sich auf der Abstellfläche befindlichen Gegenständen erwünscht ist.

Bei einer anderen, zeichnerisch nicht dargestellten Konfiguration des Arbeitsmittels bildet der Bodenabschnitt 3 eine Aufstandfläche, so dass sich die Struktur eines oberseitig offenen, beispielsweise schalenartigen Gefäßes ergibt.

Bei einer weiteren, zeichnerisch ebenfalls nicht dargestellten Konfiguration des Arbeitsmittels erstreckt sich der Seitenabschnitt 8 in einer gemeinsamen Ebene mit dem Bodenabschnitt 3, wobei sich die Faltabschnitte 13, 14, die diesem Seitenabschnitt 8 zugeordnet sind, jeweils in den Ebenen der im vorstehenden Sinne aufgefalteten Seitenabschnitte 4, 5 erstrecken. In Verbindung mit einer stabilisierten Auffaltung des Griffteils 2 und einer ebenfalls stabilisierten Anbindung an das Funktionsteil 1 entsteht auf diese Weise eine ungefähr schaufelförmige Struktur, die ebenfalls vielfältig praktisch anwendbar ist.

## Patentansprüche

1. Arbeitsmittel für den Küchen- und Haushaltsbereich, bestehend zumindest aus einem plattenartigen Grundkörper, **dadurch gekennzeichnet, dass** der Grundkörper zumindest aus einem zentralen Bodenabschnitt (3) besteht, an dessen Berandung unter Zwischenanordnung von Gelenken Seitenabschnitte (4, 5, 8, 9) angesetzt sind, die zwischen einer sich in der Ebene des Bodenabschnitts (3) erstreckenden Position und einer sich gegenüber dieser Ebene unter einem Winkel erstreckenden Position verschwenkbar und in der verschwenkten Position festlegbar sind.

2. Arbeitsmittel nach Anspruch 1, **dadurch gekennzeichnet, dass** an einem, durch den Bodenabschnitt (3) und die Seitenabschnitten (4, 4, 8, 9) dargestellten Funktionsteil (1) ein Griffteil (2) angeordnet ist.

3. Arbeitsmittel nach Anspruch 2, **dadurch gekennzeichnet, dass** das Griffteil (2) aus einem, an einem Seitenteil (9) des Funktionsteiles (1) unter Zwischenanordnung eines Gelenkes angesetzten Verbindungsteil (17) besteht, welches zwischen einer sich in der Ebene des Bodenabschnitts (3) erstreckenden Position und einer sich gegenüber dieser Ebene unter einem Winkel erstreckenden Position verschwenkbar und in der verschwenkten Position festlegbar ist.

4. Arbeitsmittel nach Anspruch 3, **dadurch gekennzeichnet, dass** an das Verbindungsteil (17) unter Zwischenanordnung von Gelenken Seitenabschnitte (21, 22, 23) angesetzt sind, die zwischen einer sich in der Ebene des Bodenabschnitts (3) erstreckenden Position und einer sich gegenüber dieser Ebene unter einem Winkel erstreckenden Position verschwenkbar und in der verschwenkten Position festlegbar sind.

5. Arbeitsmittel nach einem der vorangegangenen Ansprüche 1 bis 4, **dadurch gekennzeichnet, dass** der Bodenabschnitt (3) sowie die an diesen angesetzten Seitenabschnitte (4, 5, 8, 9) rechteckig ausgebildet sind.

6. Arbeitsmittel nach Anspruch 5, **dadurch gekennzeichnet, dass** die Eckenabschnitte (12) zwischen jeweils zwei Seitenabschnitten (9, 5) mit zwei, untereinander gleich beschaffenen, dreieckigen Faltabschnitten (13, 14) versehen sind, die unter Zwischenanordnung von Gelenken mit den angrenzenden Seiten der Seitenabschnitte (9, 5) und untereinander derart in Verbindung stehen, dass sie in der verschwenkten Position der Seitenabschnitte (4, 5, 8, 9) eine aufeinander gefaltete Struktur bilden.

7. Arbeitsmittel nach einem der Ansprüche 3 bis 6, **dadurch gekennzeichnet, dass** der Verbindungsabschnitt (17) sowie die an diesen angesetzten Seitenabschnitte (21, 22, 23) rechteckig ausgebildet sind.

8. Arbeitsmittel nach Anspruch 7, **dadurch gekennzeichnet, dass** die Eckenabschnitte (26) des Verbindungsabschnitts (17) zwischen jeweils zwei Seitenabschnitten (21, 23) mit zwei, untereinander gleich beschaffenen, dreieckigen Faltabschnitten (27, 28) versehen sind, die unter Zwischenanordnung von Gelenken mit den angrenzenden Seiten der Seitenabschnitte (21, 23) und untereinander derart in Verbindung stehen, dass sie in der verschwenkten Position der Seitenabschnitte (21, 22, 23) eine aufeinander gefaltete Struktur bilden.

9. Arbeitsmittel nach einem der vorangegangenen Ansprüche 2 bis 8, **dadurch gekennzeichnet, dass** sowohl das Funktionsteil (1) als auch das Griffteil (2) aus einem Kunststoff bestehen und dass zumindest ein Teil der Gelenke als Filmscharniere (6, 7, 10, 11, 15, 16, 18, 19, 24, 25, 29, 30, 31) ausgebildet sind.

10. Arbeitsmittel nach einem der vorangegangenen Ansprüche 4 bis 9, **dadurch gekennzeichnet, dass** zur Festlegung einer Schwenkposition der Seitenabschnitte des Funktionsteiles (1) sowie des Griffteiles (2) gegenüber dem Bodenabschnitt (3) bzw. dem Verbindungsteil (17) Verrastungsmechanismen, Druckknöpfe, Kreppverschlüsse oder lediglich formschlüssig wirksame Mittel vorgesehen sind.

11. Arbeitsmittel nach einem der vorangegangenen Ansprüche 8 bis 10, **dadurch gekennzeichnet, dass** die Faltabschnitte (13, 14; 27, 28) des Funktionsteils (1) und des Griffteils (2) in der Position der aufeinander gefalteten Strukturen relativ zueinander festlegbar sind.

12. Arbeitsmittel nach einem der vorangegangen Ansprüche 8 bis 11, **dadurch gekennzeichnet, dass** die Faltabschnitte (13, 14; 27, 28) des Funktionsteils (1) und des Griffteils (2) in der Position der aufeinander gefalteten Strukturen relativ einem angrenzenden Seitenabschnitt (4, 5, 8, 9; 21, 22, 23) festlegbar sind.
